# EUROPÄISCHE PATENTSCHRIFT

(11) **EP 2 520 843 B1**
(45) Veröffentlichungstag und Bekanntmachung des Hinweises auf die Patenterteilung: **19.03.2014**
(21) Anmeldenummer: 12003130.7
(22) Anmeldetag: 02.05.2012
(51) Int. Cl.: F28F 13/06, B01F 5/06, F28F 1/40, F16L 55/027, F28F 13/12

(54) **Verwirbelungskörper**
Swirling body
Pièce de tourbillonnement

(30) Priorität: 05.05.2011 DE 102011100637
(43) Veröffentlichungstag der Anmeldung: 07.11.2012
(73) Patentinhaber: Striko Verfahrenstechnik W.Strikfeldt & Koch GmbH, 51674 Wiehl-Bomig (DE)
(72) Erfinder: Knopp, Stephan, 51643 Gummersbach (DE); Fürst, Christoph, 51674 Wiehl (DE)
(74) Vertreter: Wolff, Felix

(56) Entgegenhaltungen:
- DE-C- 680 070
- US-A- 2 677 394
- US-A- 3 923 288
- US-A- 4 461 579
- US-A- 4 727 907

## Beschreibung

Die vorliegende Erfindung betrifft einen Verwirbelungskörper der in einem Rohr angeordnet wird aufweisend eine Vielzahl von Verwirbelungselementen, die jeweils eine Grundfläche und davon abgekantete Rohranlageflügel aufweisen, wobei zwei Verwirbelungselemente jeweils um einen Verdrehwinkel zueinander vorgesehen sind.

Derartige Verwirbelungskörper sind aus dem Stand der Technik bekannt und werden beispielsweise in Rohren von Wärmetauschern angeordnet um das Fluid, das durch die Rohre strömt zu homogenisieren und/oder turbulente Strömung zu erzeugen. Nachteilig an derartigen Verwirbelungskörpern ist jedoch, dass sie vergleichsweise aufwendig zu fertigen sind. In US 3923288 A können die einen Verwirbelungskörper bildende Verwirbelungselemente zusammengeschweisst werden.

Es war deshalb die Aufgabe der vorliegenden Erfindung einen Verwirbelungskörper zur Verfügung zu stellen, der die Nachteile des Standes der Technik nicht aufweist.

Gelöst wird die Aufgabe durch einen Verwirbelungskörper gemäß Anspruch 1.

Die vorliegende Erfindung betrifft einen Verwirbelungskörper, der in einem Rohr beispielsweise eines Wärmetauschers oder eines Mischers angeordnet wird. Dieser Verwirbelungskörper weist eine Vielzahl von miteinander verbundenen Verwirbelungselementen auf, die hintereinander entlang der Längsachse beispielsweise des Rohres angeordnet sind. Jeder dieser Verwirbelungselemente weist eine Grundfläche und davon abgekantete Rohranlageflügel auf. Vorzugsweise erstrecken sich diese Rohranlageflügel relativ zu der Grundfläche in unterschiedliche Richtungen. Besonders bevorzugt weist jedes Verwirbelungselement vier Rohranlageflügel auf, wobei sich ganz besonders bevorzugt jeweils zwei Flügel in einer und jeweils zwei Flügel in eine andere Richtung erstrecken. Ganz besonders bevorzugt sind diese Richtungen entgegengesetzt.

Weiterhin ist der Verwirbelungskörper erfindungsgemäß so vorgesehen, dass jeweils zwei Verwirbelungselemente, die nebeneinander liegen jeweils um einen Verdrehwinkel zueinander vorgesehen sind. Vorzugsweise beträgt dieser Verdrehwinkel 80- 100°, besonders bevorzugt 90°.

Erfindungsgemäß ist der Verwirbelungskörper nun so vorgesehen, dass er einstückig gefertigt ist, d. h. dass die Verwirbelungselementen nicht als Einzelteile gefertigt werden, die anschließend miteinander verbunden werden.

Der Erfindungsgemäße Verwirbelungskörper ist wesentlich einfacher zu fertigen als Verwirbelungskörper im Stand der Technik und weist ein geringeres Gewicht auf. Der erfindungsgemäße Verwirbelungskörper kann auch für große Rohrinnendurchmesser zur Verfügung gestellt werden.

Vorzugsweise sind die Rohranageflügel in einem Winkel von 90-100° besonders bevorzugt 93-97° relativ zu der Grundfläche vorgesehen.

Weiterhin bevorzugt weist jeder Rohranlageflügel eine gekrümmte Anlagefläche auf, die an der Rohrinnenwand anliegt und/oder mit einem geringen Abstand zu dieser vorgesehen ist. Die Anlagefläche folgt vorzugsweise, zumindest abschnittsweise der Krümmung der Innenwand des Rohres, in das der erfindungsgemäße Verwirbelungskörper eingeführt wird.

Vorzugsweise ist die die Anlagefläche von zwei benachbarten Rohranlageflügeln Helix-förmig vorgesehen. Weiterhin bevorzugt ist die Anlagefläche der Rohranlageflügel abgeschrägt vorgesehen.

Gemäß einem weiteren bevorzugten Gegenstand der vorliegenden Erfindung ist in jeder Grundfläche eine Ausnehmung angeordnet. Diese Ausnehmung hat insbesondere bei der Herstellung des erfindungsgemäßen Verwirbelungskörpers Vorteile, weil das jeweilige Verwirbelungselement mittels der Ausnehmung zentriert werden kann. Vorzugsweise handelt es sich bei der Ausnehmung um eine kreisförmige oder ellipsenförmige Ausnehmung. Vorzugsweise ist die Ausnehmung in der Mitte der Grundfläche angeordnet.

Der erfindungsgemäße Verwirbelungskörper eignet sich insbesondere zur Anordnung in Rohren eines verfahrenstechnischen Apparates.

Ein weiterer Gegenstand der vorliegenden Erfindung ist deshalb ein verfahrenstechnischer Apparat, insbesondere ein Wärmetauscher oder ein Mischer, mit mindestens einem Rohr, wobei der erfindungsgemäße Verwirbelungskörper in dem Rohr angeordnet ist.

Ein weiterer Gegenstand der vorliegenden Erfindung ist ein Verfahren zur Herstellung des erfindungsgemäßen Verwirbelungskörpers, bei dem ein Blechstreifen intermittierend in ein einziges Werkzeug transportiert und dort gestanzt, gekantet und verdreht wird.

Bei dem erfindungsgemäßen Verfahren zur Herstellung eines Verwirbelungskörpers wird ein Metallblechstreifen intermittierend in ein Werkzeug transportiert. Dieses Werkzeug ist vorzugsweise zweiteilig ausgeführt, wobei sich die Werkzeugteile während eines Maschinenzyklus aufeinander zu- und wieder wegbewegen. Bei diesem Maschinenzyklus werden unterschiedliche Bereiche des Blechstreifens gleichzeitig gestanzt, gekantet und verdreht, wobei der Metallstreifen zwischen den einzelnen Bearbeitungsschritten jeweils um eine bestimmte Vorschublänge, die mindestens der Länge eines Verwirbelungselementes entspricht, relativ zu dem Werkzeug weitertransportiert wird. Dadurch wird der Metallstreifen nacheinander unterschiedlichen Bearbeitsprozessen unterzogen. Es wird jedoch lediglich ein Werkzeug benötigt.

Im Stanz- und Umformwerkzeug und während der Herstellung der Verwirbelungskörper wird der Blechstreifen vorzugsweise vom Coil auf die benötigte Breite gestanzt.

Weiterhin bevorzugt werden die Verwirbelungselemente in einem letzten Verfahrensschritt zueinander ausgerichtet, so dass sie hinterher problemlos in ein Rohr einführbar sind. Vorzugsweise erfolgt diese Ausrichtung ebenfalls in dem oben beschriebenen Werkzeug und während eines Maschinenzyklus.

Weiterhin bevorzugt wird das Blech bei einem Maschinenzyklus um eine Vorschublänge, die mindestens zwei Verbindungselementen entspricht, weitertransportiert.

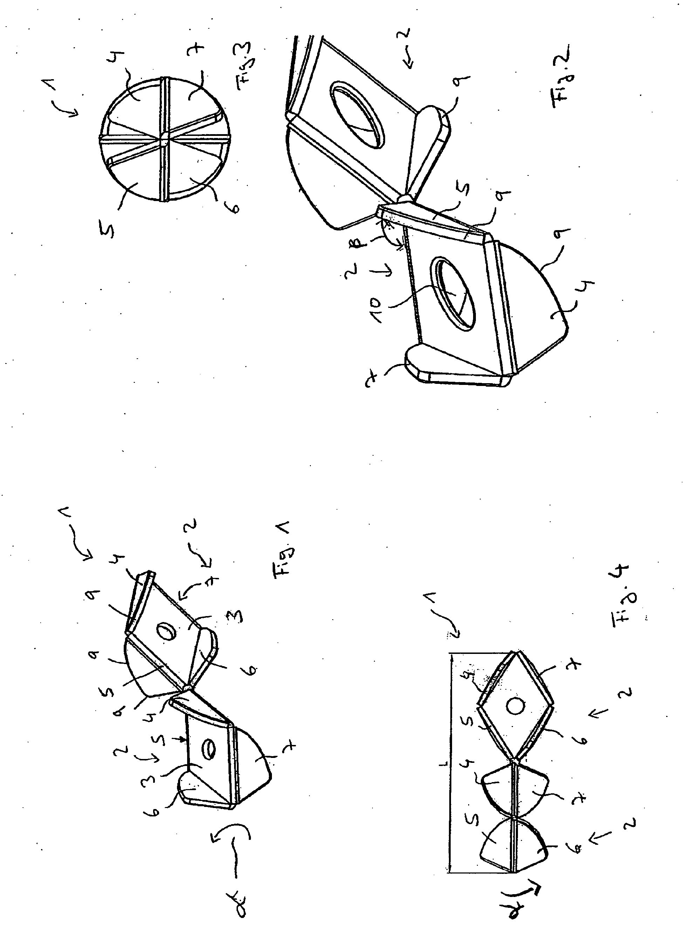

Im Folgenden wird die Erfindung anhand der Figuren 1-5 erläutert. Diese Erläuterungen sind lediglich beispielhaft und schränken den allgemeinen Erfindungsgedanken nicht ein. Die Erläuterungen gelten für den erfindungsgemäßen Verwirbelungskörper, den erfindungsgemäßen verfahrenstechnischen Apparat sowie das erfindungsgemäße Verfahren gleichermaßen.
Figuren 1 und 2 zeigen den erfindungsgemäßen Verwirbelungskörper in einer dreidimensionalen Ansicht.
Figur 3 zeigt den erfindungsgemäßen Verwirbelungskörper als Draufsicht entlang seiner Längsachse.
Figur 4 zeigt eine Seitenansicht des erfindungsgemäßen Verwirbelungskörpers.
Figur 5 zeigt schematisch ein Werkzeug zur Herstellung des erfindungsgemäßen Verwirbelungskörpers.

Figuren 1 und 2 zeigen den erfindungsgemäßen Verwirbelungskörper (1) jeweils in einer dreidimensionalen Darstellung. Dieser weist in dem vorliegenden Fall zwei Verwirbelungselemente (2) auf, wobei der Fachmann versteht, dass die Zahl der hintereinander liegenden Verwirbelungselemente (2) eher größer sein dürfte und beispielsweise so gewählt wird, dass die Länge des Verwirbelungskörpers der Länge des Rohres, in das er eingeführt wird zumindest im Wesentlichen entspricht. Erfindungsgemäß ist der Verwirbelungskörper (1) einstückig vorgesehen, d.h. die Verwirbelungselemente (2) werden alle beispielsweise aus einem Metallstreifen, insbesondere einem Blechtreifen, hergestellt nicht zusammengefügt. Jedes Verwirbelungselement (2) weist eine Grundfläche (3) auf, von der mindestens ein, hier vier, Rohranlageflügel (4-7) abgekantet sind. In dem vorliegenden Fall beträgt der Abkantwinkel 95° relativ zu der jeweiligen Oberfläche der Grundfläche 3. Jeder Rohranlageflügel 4 - 7 liegt zumindest abschnittsweise an der Innenoberfläche eines Rohres, in das der Verwirbelungskörper eingeführt wird an und/oder erstreckt sich bis in deren unmittelbare Nähe. In dem vorliegenden Fall sind pro Verwirbelungselement 2 jeweils zwei Rohranlageflügel 4, 6 in eine und zwei Rohranlageflügel 5,7 in eine andere, hier entgegengesetzte, Richtung abgekantet. Die Anlagefläche 9 eines jeden Rohranlageflügels 4 - 7, die beispielsweise an der Innenoberfläche des Rohres anliegt, ist in dem vorliegenden Fall gekrümmt ausgebildet, wobei die Anlageflächen 9 von zwei benachbarten Rohranlageflügeln 4, 5 oder 6, 7 zusammen eine Helix-Form/Spiralform ergeben. In der Grundfläche 3 ist eine Ausnehmung 10, hier eine kreisrunde Bohrung/Stanzung vorgesehen, die insbesondere dazu dient, die Verwirbelungselemente bei ihrer Herstellung in einer eindeutigen Lage relativ zu einem Werkzeug zu fixieren. Des Weiteren ist deutlich zu erkennen, dass die beiden Verwirbelungselemente 2 zueinander um einen Verdrehwinkel α verdreht sind, der in dem vorliegenden Fall 90° beträgt. Dies ist besonders gut in Figur 4 zu erkennen. Figur 3 zeigt eine Ansicht des erfindungsgemäßen Verwirbelungskörpers entlang seiner Längsachse. Deutlich ist zu erkennen, dass der Querschnitt des Verwirbelungskörpers kreisförmig ist, so dass er gut in ein kreisrundes Rohr eingeführt werden kann.

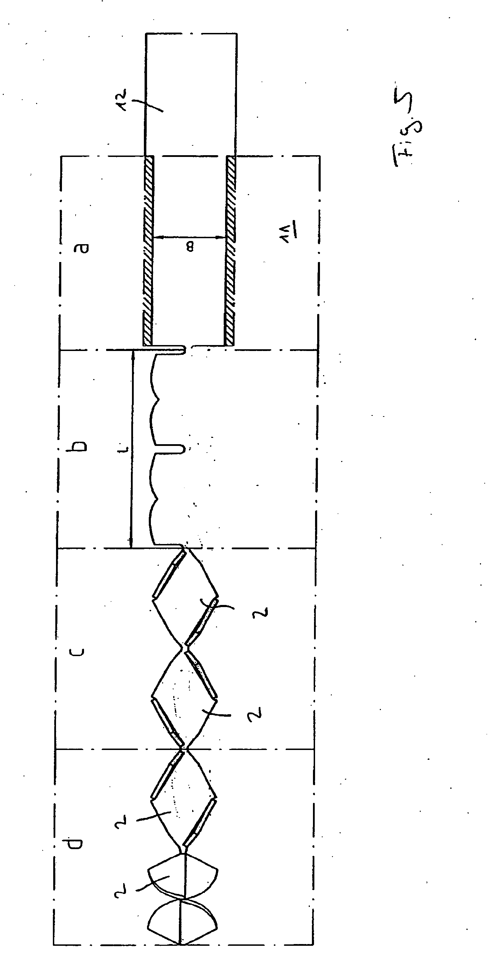

Figur 5 zeigt die Herstellung des erfindungsgemäßen Verwirbelungskörpers. Ein Blechstreifen (12) wird intermittierend in ein Werkzeug (11) eingeführt und durch dieses hindurch transportiert, wobei er bei nach jedem Maschinenzyklus um die Länge L weitergeführt wird. In diesem Werkzeug wird der Blechstreifen in einem Verfahrensschritt a optional auf eine bestimmte Breite B gebracht. Danach wird der ebene Blechstreifen entlang seiner Kontur gestanzt (Herstellungsschritt b). Im nächsten Verfahrensschritt c werden die Rohranlageflügelelemente 4 - 6 von der Grundfläche 3 abgekantet (vgl. Verfahrensschritt c) und in einem Verfahrensschritt d wird ein Verwirbelungselement 2 relativ zu seinem benachbarten Element relativ um 90° verdreht. Anschließend werden die beiden Verwirbelungselemente 2 des Verwirbelungskörpers 1 optional zueinander ausgerichtet. Alle Herstellungsschritte erfolgen durch Öffnen und Schließen zweier Werkzeugteile. Nach dem Öffnen und dem vor dem nächsten Schliessen wird der Blechstreifen 12 jeweils um die Vorschublänge L, die hier der Länge von zwei Verwirbelungselementen 2 weitertransportiert und dem nächsten Herstellungsschritt unterzogen. Dadurch wird eine endlos Kette von Verwirbelungselementen 2 produziert, die anschließend auf die gewünschte Länge des Verwirbelungskörpers abgelenkt wird. Es wird lediglich ein Werkzeug 11 für alle Herstellungsschritte benötigt.

### Bezugszeichenliste:

- 1: Verwirbelungskörper
- 2: Verwirbelungselement
- 3: Grundfläche
- 4: Rohranlageflügel
- 5: Rohranlageflügel
- 6: Rohranlageflügel
- 7: Rohranlageflügel
- 8: Ausnehmung
- 9: Anlagefläche
- 10: Ausnehmung
- 11: Werkzeug
- 12: Blechstreifen
- B: Breite
- a: auf eine Breite B Normieren
- b: Stanzen
- c: Abkanten
- d: drehen
- α: Verdrehwinkel
- β: Winkel zwischen Grundfläche und Rohranlageflügel 4 - 7

## Patentansprüche

1. Verwirbelungskörper (1), der in einem Rohr angeordnet wird, aufweisend eine Vielzahl von Verwirbelungselementen (2), die jeweils eine Grundfläche (3) und davon abgekantete Rohranlageflügel (4 - 7) aufweisen, wobei zwei Verwirbelungselemente jeweils um einen Verdrehwinkel (a) zueinander vorgesehen sind, **dadurch gekennzeichnet, dass** der Verwirbelungskörper (1) eirlstückig gefertigt ist, d.h. dass die Verwirbelungselemente nicht als Einzelteile gefertigt werden, die anschließend miteinander verbunden werden.

2. Verwirbelungskörper (1) nach Anspruch 1, **dadurch gekennzeichnet, dass** die Rohranlageflügel in einem Winkel (β) von 90 - 100°, vorzugsweise 93 - 97° vorgesehen sind.

3. Verwirbelungskörper (1) nach einem der voranstehenden Ansprüche, **dadurch gekennzeichnet, dass** jeder Rohranlageflügel (4 - 7) eine gekrümmte Anlagefläche (9) aufweist.

4. Verwirbelungskörper (1) nach Anspruch 3, **dadurch gekennzeichnet, dass** die Anlagefläche (9) von zwei benachbarten Rohranlageflügeln (4 - 7) Helix-förmig vorgesehen ist.

5. Verwirbelungskörper (1) nach Anspruch 4, **dadurch gekennzeichnet, dass** die Anlagefläche (9) abgeschrägt ist.

6. Vetwirbelungskörper (1) nach einem der voranstehenden Ansprüche, **dadurch gekennzeichnet, dass** in jeder Grundfläche (3) eine Ausnehmung (10) vorgesehen ist.

7. Verfahrenstechnischer Apparat, insbesondere Wärrnetauscher, mit mindestens einem Rohr, **dadurch gekennzeichnet, dass** in dem Rohr ein Verwirbelungskörper (1) gemäß einem der voranstehenden Ansprüche angeordnet ist.

8. Verfahren zur Herstellung eines Verwirbelungskörpers (1) gemäß einem der Ansprüche 1 bis 6, **dadurch gekennzeichnet, dass** ein Blechstreifen (12) intermittierend in ein einziges Werkzeug (11) transportiert und dort während eines Maschinenzyklus gleichzeitig gestanzt (b), gekantet (c) und verdreht wird, wobei dass das Blech bei einem Maschinenzyklus um die Länge (L) von mindestens zwei Verwirbelungselementen (2) weitertransportiert wird.

9. Verfahren nach Anspruch 8, **dadurch gekennzeichnet, dass** der Blechstreifen (12) zunächst auf eine Breite (B) gebracht wird.

10. Verfahren nach einem der Ansprüche 8 und 9, **dadurch gekennzeichnet, dass** die Verwirbelungselemente (2) zueinander ausgerichtet werden.

## Claims

1. Swirling body (1) which is arranged in a pipe, having a multiplicity of swirling elements (2) which in each case have a main face (3) and pipe bearing wings (4-7) which are angled away from it, two swirling elements in each case being provided at a rotational angle (α) with respect to one another, **characterized in that** the swirling body (1) is manufactured in one piece, that is to say the swirling elements are not manufactured as individual parts which are subsequently connected to one another.

2. Swirling body (1) according to Claim 1, **characterized in that** the pipe bearing wings are provided at an angle (β) of from 90 to 100°, preferably of from 93 to 97°.

3. Swirling body (1) according to either of the preceding claims, **characterized in that** each pipe bearing wing (4-7) has a curved bearing face (9).

4. Swirling body (1) according to Claim 3, **characterized in that** the bearing face (9) of two adjacent pipe bearing wings (4-7) is provided in a helical shape.

5. Swirling body (1) according to Claim 4, **characterized in that** the bearing face (9) is bevelled.

6. Swirling body (1) according to one of the preceding claims, **characterized in that** a recess (10) is provided in each main face (3).

7. Process apparatus, in particular heat exchanger, having at least one pipe, **characterized in that** a swirling body (1) according to one of the preceding claims is arranged in the pipe.

8. Method for producing a swirling body (1) according to one of Claims 1 to 6, **characterized in that** a sheet-metal strip (12) is transported intermittently into a single die (11) and is simultaneously punched (b), edged (c) and turned there during one machine cycle, the sheet metal being transported further by the length (L) of at least two swirling elements (2) during one machine cycle.

9. Method according to Claim 8, **characterized in that** the sheet-metal strip (12) is processed first of all to a width (B).

10. Method according to either of Claims 8 and 9, **characterized in that** the swirling elements (2) are aligned with respect to one another.

## Revendications

1. Pièce de tourbillonnement (1), laquelle est disposée dans un tube, comprenant une pluralité d'éléments de tourbillonnement (2) qui comprennent à chaque fois une surface de base (3) et des ailettes d'appui contre un tube (4 - 7) pliées à l'écart de celle-ci, deux éléments de tourbillonnement étant à chaque fois prévus de manière à présenter un angle de torsion (α) l'un par rapport à l'autre, **caractérisée en ce que** la pièce de tourbillonnement (1) est fabriquée d'un seul tenant, c'est-à-dire **en ce que** les éléments de tourbillonnement ne sont pas fabriqués sous forme de parties individuelles qui sont ensuite reliées les unes aux autres.

2. Pièce de tourbillonnement (1) selon la revendication 1, **caractérisée en ce que** les ailettes d'appui contre un tube sont prévues à un angle (β) de 90 à 100°, de préférence de 93 à 97°.

3. Pièce de tourbillonnement (1) selon l'une quelconque des revendications précédentes, **caractérisée en ce que** chaque ailette d'appui contre un tube (4 - 7) comprend une surface d'appui (9) courbée.

4. Pièce de tourbillonnement (1) selon la revendication 3, **caractérisée en ce que** la surface d'appui (9) de deux ailettes d'appui contre un tube (4 - 7) adjacentes est prévue en forme d'hélice.

5. Pièce de tourbillonnement (1) selon la revendication 4, **caractérisée en ce que** la surface d'appui (9) est chanfreinée.

6. Pièce de tourbillonnement (1) selon l'une quelconque des revendications précédentes, **caractérisée en ce qu'**un évidement (10) est prévu dans chaque surface de base (3).

7. Appareil technique de procédé, en particulier échangeur de chaleur, comprenant au moins un tube, **caractérisé en ce qu'**une pièce de tourbillonnement (1) selon l'une quelconque des revendications précédentes est disposée dans le tube.

8. Procédé de production d'une pièce de tourbillonnement (1) selon l'une quelconque des revendications 1 à 6, **caractérisé en ce qu'**un ruban de tôle (12) est transporté de manière intermittente dans un outil unique (11) et y est simultanément découpé (b), plié (c) et tordu pendant un cycle de machine, la tôle étant transportée davantage de la longueur (L) d'au moins deux éléments de tourbillonnement (2) pendant un cycle de machine.

9. Procédé selon la revendication 8, **caractérisé en ce que** le ruban de tôle (12) est tout d'abord amené à une largeur (B).

10. Procédé selon 1"une quelconque des revendications 8 et 9, **caractérisé en ce que** les éléments de tourbillonnement (2) sont alignés les uns par rapport aux autres.
